# EUROPÄISCHE PATENTSCHRIFT

(11) **EP 3 130 494 B1**
(45) Veröffentlichungstag und Bekanntmachung des Hinweises auf die Patenterteilung: **21.11.2018**
(21) Anmeldenummer: 16001808.1
(22) Anmeldetag: 09.08.2016
(51) Int. Cl.: B60J 7/08, B60J 7/06, E06B 9/13, B65D 88/12

(54) **VORRICHTUNG ZUM ABDECKEN EINER BESCHICKUNGSÖFFNUNG AN EINEM BEHÄLTER**
DEVICE FOR COVERING A FEEDING OPENING ON A CONTAINER
DISPOSITIF DESTINE A RECOUVRIR UNE OUVERTURE D'INTRODUCTION SUR UN RECIPIENT

(30) Priorität: 10.08.2015 DE 202015005493 U
(43) Veröffentlichungstag der Anmeldung: 15.02.2017
(73) Patentinhaber: Rewald GmbH, 10585 Berlin (DE); Löwe Handelsgesellschaft mbH, 16540 Hohen Neuendorf (DE)
(72) Erfinder: Rewald, Stefan, D - 13086 Berlin (DE); Löwe, Hans-Jürgen, D - 16540 Hohen Neuendorf (DE)
(74) Vertreter: Cohausz Hannig Borkowski Wißgott

(56) Entgegenhaltungen:
- EP-A1- 0 669 271
- DE-U1- 29 709 540
- DE-U1-202013 005 164
- US-A1- 2014 210 228

## Beschreibung

Die Erfindung betrifft eine Vorrichtung zum Abdecken einer horizontalen Beschickungsöffnung eines Behälters wie Absetzmulde oder Container o. dgl., mit einer die Beschickungsöffnung flexibel verschließbaren Abdeckplatte, die entlang der Seitenwände in Richtung der Längsachse des Behälters zu einer Stirnwand des Behälters zugeordneten Rolle auf- oder abwickelbar ist, wobei die Abdeckplatte zum Versteifen senkrecht zu den Seitenwänden Profile zum Halten und/oder Führen aufweist und an einer Stirnseite auf einer Oberseite der Abdeckplatte eine kraftschlüssig verbundene Wickelwelle mit Handkurbel zum Auf- und Abwickeln der Abdeckplatte vorgesehen ist, wobei die Abdeckplatte an ihrer der Handkurbel gegenüberliegenden Stirnseite mit einem Schließblech versehen ist.

### Stand der Technik

Die Abdeckung von horizontalen Beschickungsöffnungen an Containern und Absetzmulden sind hinlänglich bekannt (DE 20 2010 012 774 U1, DE 38 22 362 A1, DE 20 2010 005 966 U1).

Aus der EP 0 669 271 A1 ist ein Transportbehälter, insbesondere Container für Schutt, Abfälle und dergleichen bekannt, deren Seitenwände zueinander parallel verlaufende Oberkanten aufweisen und deren Oberkanten ihrer Stirnwände jeweils eine gerade Verbindung der Seitenwände bilden, wobei die Oberkante der heckseitigen Stirnwand und die der gegenüberliegenden Stirnwand unterschiedliche Höhe über den Behälterboden aufweisen können, mit einem am Behälter angeschlagenen deckelartigen Aufsatz, der aus mehreren gelenkig verbundenen den Behälter in Querrichtung überspannenden Teilen gebildet und in seiner die Behälteröffnung abdeckenden Stellung mit diesem verschleißbar ist. Die Teile des deckelartigen Aufsatzes sind lamellenartige Streifen einer solchen Vielzahl und solcher verhältnismäßig geringen Breit, dass die Streifen beim Öffnen bzw. Schließen des deckelartigen Aufsatzes in diesem übereinander aufrollbar bzw. von einander abrollbar sind.

Der deckelartige Aufsatz kann auch aus einer elastischen Materialbahn bestehen, an oder in der eine Vielzahl von Stäben vorgesehen ist.

Des Weiteren sind eine Reihe von Lösungen bekannt, die Vorrichtungen zum Auf- und Abrollen eines Behanges an einem Tor (DE 20 2013 005 164 U1), einer Abdeckung für einen Container (US 2014/210228A1) oder eines Verdeckes (DE 297 09 540 U1) bekannt.

Danach ist die Beschickungsöffnung durch eine flexible Containerabdeckung verschließbar, wobei diese mit zwei an den Seitenwänden angeordneten Aufnahmeeinrichtungen verbunden ist und die Containerabdeckung auf einem Aufnahmeteil der Aufnahmeeinrichtung aufliegt. Die Containerabdeckung ist einerseits auf einer Seitenwand und andererseits auf einem zwischen den beiden Aufnahmeeinrichtungen gespannten Drahtseil aufliegend gehaltert.

Dieser Stand der Technik ist verhältnismäßig kompliziert aufgebaut und erfordert zudem eine sehr große Aufmerksamkeit und einen hohen Zeitaufwand bei der Beschickung, damit die Befestigungsösen für das Drahtseil nicht beschädigt werden. Des Weiteren sind Rollgummi-Abdeckungen für Absetzcontainer bekannt, bei denen eine zu einer Rolle aufgewickelte Gummiplatte mit ihrer Stirnseite an einer Stirnwand des Containers fest verschraubt ist und zum Verschließen der Beschickungsöffnung abgerollt oder zum Öffnen aufgerollt werden kann. Die Gummiplatte hat an ihrer Oberseite Haltebänder, die in regelmäßigen Abständen voneinander angeordnet und senkrecht zu den Seitenwänden ausgerichtet sind (www.loewe-container.de/pages/container/ugd-neuedeckelloesung-mit-rollgummi-fuer-asymmetrische-absetzcontainer160.phd;www.utgentsorgung.de/index.php/ container/75-absetzcontainer).

Diese bekannten Lösungen haben den Nachteil, dass die aufgerollte Gummiplatte fest mit dem Container verschraubt ist, wodurch diese beim Beschicken der Containeröffnung hinderlich ist und beschädigt werden kann. Das Aufwickeln und Abwickeln der Gummiplatte muss außerdem ohne Hilfsmittel erfolgen und wird durch die Haltebänder zusätzlich erschwert, weil die Abstände der Haltebänder voneinander nicht an den jeweiligen Rolldurchmesser angepasst sind.

### Aufgabenstellung

Bei diesem Stand der Technik liegt der Erfindung die Aufgabe zugrunde, eine Vorrichtung der eingangs genannten Art so zu verbessern, dass die Abdeckung den Beschickungsvorgang des Behälters nicht behindert, eine Beschädigung der Abdeckung vermieden und das Verschließen sowie Öffnen der Beschickungsöffnung bei Erhöhung der Sicherheit deutlich vereinfacht wird.

Diese Aufgabe wird durch eine Vorrichtung der eingangs genannten Art mit den Merkmalen des Anspruchs 1 gelöst.

Vorteilhafte Ausgestaltungen der erfindungsgemäßen Vorrichtung sind den Unteransprüchen entnehmbar.

Die erfindungsgemäße Lösung zielt darauf ab, den Kraftaufwand beim Öffnen oder Verschließen der Beschickungsöffnung eines Behälters durch Aufrollen und Abrollen für das Bedienpersonal zu reduzieren und die Abdeckung von der Beschickungsöffnung abnehmbar zu gestalten. Dies wird dadurch erreicht, dass sich die Profile aus jeweils übereinander angeordneten, die Abdeckplatte kraftschlüssig verbindenden Obergurt und Untergurt zusammensetzen und dass das Schließblech einen in Richtung der Oberseite der Abdeckplatte abgewinkelten Steg von 45° aufweist, an dem mindestens zwei Befestigungsaugen zum Einhängen jeweils einer Haltekette angeordnet sind, die an der zugeordneten Stirnwand des Behälters zum Befestigen oder Lösen der Abdeckplatte auf bzw. von der Beschickungsöffnung durch Karabinerhaken anschlag- oder lösbar ist, und dass der Steg durch lösbare Schraubverbindungen fest mit der Stirnwand verbunden ist.

Die direkte kraftschlüssige Verbindung von Wickelwelle und Abdeckplatte ermöglicht es, dass die Abdeckplatte um sich selbst zu einer Rolle auf- und von einer Rolle abgewickelt werden kann. Der Kraftaufwand beim Auf- und Abwickeln wird durch die an den jeweiligen Rolldurchmesser der Rolle angepassten Abstände der Profile zum Halten und/oder Führen und deren Ausrichtung deutlich reduziert.

Nach einer bevorzugten Ausgestaltung der erfindungsgemäßen Vorrichtung ist vorgesehen, dass die Wickelwelle aus einem Kastenhohlprofil gebildet ist, dessen eine Breitseite entlang der Stirnseite der Abdeckplatte an der Oberseite der Abdeckplatte aufliegend angeordnet ist, und dass dem Kastenprofil ein an der Unterseite der Abdeckplatte verlegtes Halteblech zugeordnet ist, wobei das Kastenhohlprofil, die Abdeckplatte und das Halteblech durch Schraubverbindungen kraftschlüssig miteinander verbunden sind.

In einer weiteren zweckmäßigen Ausgestaltungsvariante der Erfindung ist die Handkurbel kraftschlüssig, vorzugsweise durch Schweißung mit dem Kastenhohlprofil so verbunden, dass ihr Kurbelarm in einer zur Unterseite der Abdeckplatte hin senkrecht ausgerichteten Lage angeordnet und einer der Seitenwände des Behälters zugeordnet ist.

Es hat sich als vorteilhaft erwiesen, dass am Kastenkohlprofil über die Stirnseite der Abdeckplatte voneinander gleichmäßig beabstandete Befestigungsaugen zum Einhängen jeweils einer Haltekette angeordnet sind, die an der zugeordneten Stirnwand des Behälters festgelegten Befestigungsaugen zum Befestigen oder Lösen der Abdeckplatte durch Karabinerhaken anschlag- oder lösbar ist. Vor dem Aufrollen der Abdeckplatte werden die Halteketten auf der Abdeckplatte in Richtung der Längsachse des Behälters abgelegt und mit aufgerollt.
Wenn eine solche Befestigung nicht gewünscht wird, kann nach dem Beschicken des Behälters die Stirnseite der Abdeckplatte mit der Stirnwand des Behälters durch Haltemittel lösbar verbunden und die Wickelwelle nahe der Stirnwand des Behälters auf der Abdeckplatte so angeordnet werden, dass das Auf- oder Abwickeln der Abdeckplatte durch die an der Stirnwand fixierte Stirnseite nicht behindert wird.

In einer weiteren bevorzugten Ausführungsform der Erfindung ist vorgesehen, dass die Profile des Obergurts zum Halten eine Länge aufweisen, die dem Außenabstand der Seitenwände des Behälters entsprechen, und dass die Profile des Untergurts zum Führen eine Länge besitzen, die dem lichten Innenabstand der Seitenwände entsprechen.
Von Vorteil ist, wenn das Profil des Obergurts ein U-Profil umfasst, dessen Steg auf der Oberseite der Abdeckplatte aufliegt und dessen Schenkel von der Abdeckplatte weg gerichtet sind, und dass das Profil des Untergurts aus einem U-Profil gebildet ist, dessen Steg der Unterseite der Abdeckplatte zugewandt und dessen Schenkel der Unterseite abgewandt sind, wobei Obergurt und Untergurt durch Schraubverbindungen kraftschlüssig miteinander verbunden sind.
Das Profil des Obergurts und das Profil des Untergurts kann auch ein geschlossenes Hohlprofil, vorzugsweise Kastenhohlprofil, Trapezprofil, Rohr- oder Dreieckprofil bzw. ein Vollprofil, vorzugsweise ein Rechteckflachprofil, sein, ohne die Erfindung zu verlassen.
Die jeweils mit ihren Schenkeln von der Ober- und Unterseite der Abdeckplatte weg gerichteten U-Profile von Ober- und Untergurt und ihre Breiten und Schenkelhöhen stellen sicher, dass die Ober- und Unterseiten der Abdeckplatte bei ihrem Auf- und Abwickeln nicht direkt aufeinander zu liegen kommen und ein entsprechender Abstand voneinander gewährleistet bleibt, so dass das Au- und Abwickeln durch weitgehenden Wegfall der Reibkräfte erleichtert wird.
Vorteilhaft beim Auf- und Abwickeln ist, wenn der Untergurt gegenüber dem Obergürt eine Breite und eine Schenkelhöhe aufweist, die um das C,25fache bzw. 0,57fache kleiner ist als die Breite bzw. Schenkelhöhe des Obergurtes, weil dadurch die Biegung der Abdeckplatte beim Auf- und Abrollen erleichtert wird.

In einer weiteren bevorzugten Ausgestaltung der erfindungsgemäßen Vorrichtung weisen die Profile in Richtung der Längsachse des Behälters voneinander einen Abstand auf, der in Abhängigkeit des Durchmessers der Rolle beim Aufrollen der Abdeckplatte zunimmt und bei ihrem Abrollen abnimmt.
Von besonderem Vorteil ist, dass der Abstand der der Handkurbel zugewandten ersten beiden Profile voneinander jeweils etwa 10% der Länge der Abdeckplatte, der Abstand der nächstfolgenden 3. bis 6. Profile jeweils voneinander etwa 15% der Länge der Abdeckplatte und der Abstand des 6. Profils von der anderen Stirnseite etwa 20% der Länge der Abdeckplatte beträgt. Die unterschiedlichen Abstände der Profile voneinander gewährleisten, dass sich die Profile beim Abwickeln oder Aufwickeln nicht gegenseitig behindern und einen Abstand der einzelnen Wickellagen voneinander sicherstellen.

Erfindungsgemäß ist die der Handkurbel gegenüberliegende Stirnseite der Abdeckplatte an der zugeordneten Stirnwand dcs Behälters durch Haltemittel lösbar fixiert werden.
Erfinsungsgemäß ist die Abdeckplatte an ihrer der Handkurbel gegenüberliegenden Stirnseite mit einem Schließblech versehen, das an der Unterseite der Abdeckplatte angeordnet ist. An der Oberseite der Abdeckplatte ist ein dem Schließblech zugeordnetes Halteblech vorgesehen, wobei Halteblech, Abdeckplatte und Schließblech durch Schraubverbindungen kraftschlüssig miteinander verbunden sind.
Erfindungsgemäß ist vorgesehen, dass das Schließblech einen in Richtung der Oberseite der Abdeckplatte abgewinkelten Steg von 45° aufweist, an dem mindestens zwei Befestigungsaugen zum Einhängen jeweils einer Haltekette angeordnet sind, die an der zugeordneten Stirnwand des Behälters zum Befestigen oder Lösen der Abdeckplatte auf bzw. von der Beschickungsöffnung durch Karabinerhaken anschlag- oder lösbar ist.
Die Halteketten bleiben während des Aufrollens oder Abrollens an der Stirnwand des Behälters angeschlagen.
Sofern ein Anschlagen mittels Halteketten unerwünscht sein sollte, ist es aber auch möglich, die Stirnseite der Abdeckplatte durch andere Haltemittel, wie lösbare Schraubverbindungen, an der Stirnwand des Behälters zu befestigen, ohne die Erfindung zu verlassen.
Die jeweils lösbare Verbindung der Abdeckplatte an den Stirnwänden des Behälters ermöglicht es, die aufgerollte Abdeckplatte vor der Beschickung des Behälters vollkommen von der Beschickungsöffnung zu entfernen, so dass eine Beeinträchtigung oder Behinderung des Beschickungsvorganges durch die Abdeckplatte ausgeschlossen werden kann.

Von Vorteil ist auch, wenn die Abdeckplatte aus einer dünnen Gummiplatte mit einer Gewebeeinlage oder einer biegsamen Kunststoffplatte mit einem geringem Flächengewicht zum verbesserten Auf- und Abrollen besteht. Dies reduziert das Gewicht und vereinfacht die Handhabung der Abdeckung erheblich.
Die Profile zum Halten und Führen, die die Abdeckplatte versteifen, erhöhen die Tragfähigkeit, ohne dass das Flächengewicht deutlich zunimmt.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an einem 5Ausführungsbeispiel näher erläutert werden.

Es zeigen
Fig. 1 eine Draufsicht der erfindungsgemäßen Vorrichtung mit der Abdeckplatte im abgewickelten Zustand,
Fig. 2 eine Unteransicht der Abdeckplatte,
Fig. 3 einen perspektivischen Schnitt entlang der Linie A-A der Fig. 1,
Fig. 4 einen perspektivischen Schnitt entlang der Linie B-B der Fig. 1,
Fig. 5 einen perspektivischen Schnitt entlang der Linie C-C der Fig. 1,
Fig. 6a und 6b eine Seitenansicht und Draufsicht der Absetzmulde bei geöffneter Beschickungsöffnung und

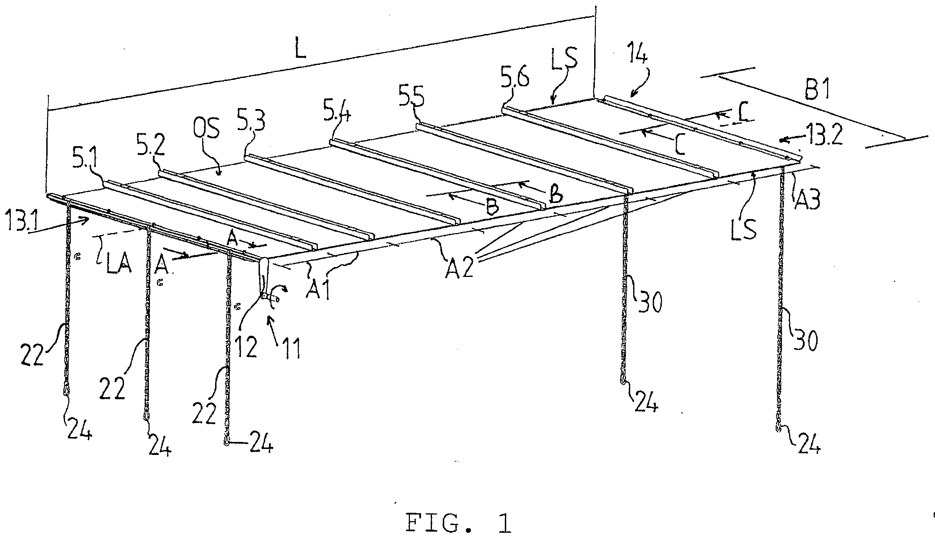

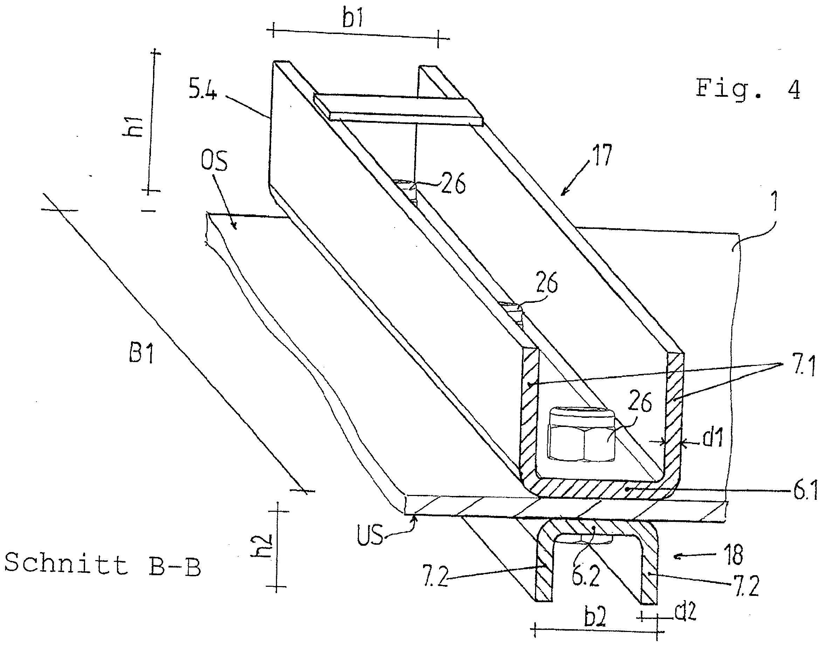

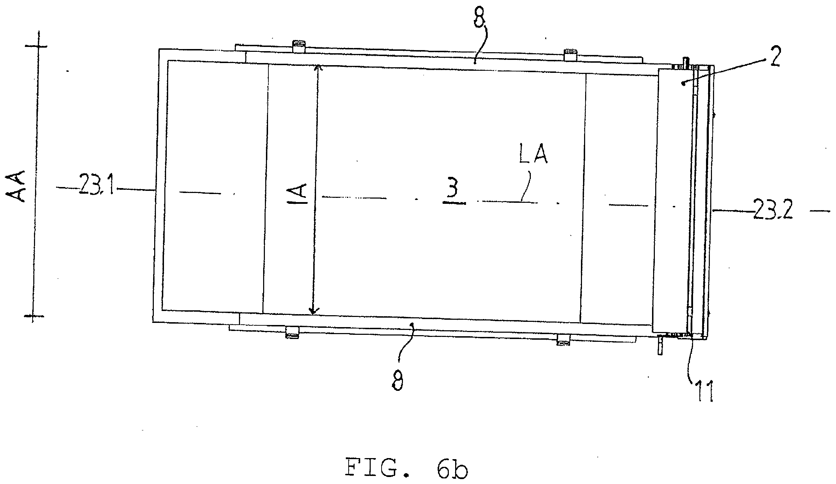

Die Fig. 1 zeigt eine Draufsicht der Abdeckplatte 1 im abgewickelten Zustand. Die Abdeckplatte 1 besteht aus einer 5 mm dicken Gummiplatte mit einer Gewebeeinlage, die das Aufwickeln zu einer Rolle 2 und das Abwickeln von einer Rolle 2 begünstigt. Die Abmessungen der Abdeckplatte 1 sind so bemessen, das eine übliche Beschickungsöffnung 3 von einem Behälter 4, beispielsweise einer Absetzmulde, ganzflächig abgedeckt werden kann (siehe Fig. 6b). Die Länge L der Abdeckplatte 1 beträgt beispielsweise 4010 mm und die Breite B1 1800 mm.
An der Oberseite OS der Abdeckplatte 1 sind senkrecht zu ihrer Längsachse LA voneinander in verschiedenen Abständen A1 und A2 beabstandete Profile 5.1, 5.2, 5.3., 5.4, 5.5 und 5.6 zum Halten der Abdeckplatte 1 auf der Beschickungsöffnung 3 befestigt. Die Profile 5.1 bis 5.6 bestehen aus einem verzinkten J-Profil der Stahlqualität S235JR. Es hat beispielsweise eine Dicke d1 von 4 mm, eine Breite b1 des Steges 6.1 von 40 mm, eine Höhe h1 des Schenkels 7.1 von 35 mm und eine Länge 11 von 1875 mm. Das Profil 5.1 bis 5.6 erstreckt sich damit über die gesamte Breite B1 und überragt die Abdeckplatte 1 an jeder ihrer Längsseiten LS un etwa 47,5 mm, so dass sich die Profile 5.1 bis 5.6 der abgewickelten 1 auf den Seitenwänden 8 der Absetzmulde 4 auflagern können (siehe auch Fig. 4).
Die Profile 5.1 bis 5.6 sind auf der Abdeckplatte 1 so angeordnet, dass ihre Stege 6.1 an der Oberseite OS der Abdeckplatte 1 bündig aufliegen und ihre Schenkel 7.1 von der Oberseite OS aufragen.
An der Oberseite OS der Stirnseite 13.1 der Abdeckplatte 1 ist eine Wickelwelle 9 kraftschlüssig befestigt, die aus einem verzinkten Kastenhohlprofil 10 aus Stahl besteht, welches mit seiner Breitseite BS auf der Oberseite OS der Abdeckplatte 1 aufliegt und sich über die gesamte Breite B1 der Abdeckplatte 1 erstreckt. Das Kastenhohlprofil 10 hat beispielsweise eine Abmessung von 40 mm x 20 mm x 2 mm.
Die Wickelwelle 9 trägt eine Handkurbel 11, deren Kurbelarm 12 kopfseitig am Kastenhohlprofil 10 verschweißt ist, so dass bei einer Drehung der Handkurbel 11 im Uhrzeigersinn, die Abdeckplatte 1 um sich selbst zur Rolle 2 aufgewickelt und bei entgegengesetzter Drehrichtung von der Rolle 2 wieder abgewickelt werden kann.
Der Kurbelarm 12 der Handkurbel 11 ist in einer zur Unterseite US der Abdeckplatte 1 hin senkrecht ausgerichteten Lage angeordnet und einer der Seitenwände 8 des Behälters 4 zugeordnet.
Der Abstand A1 der der Wickelwelle 9 benachbarten beiden Profile 5.1 und 5.2 und der Abstand A2 der nachfolgenden vier Profile 53. Bis 5.6 sind in Abhängigkeit des jeweiligen Durchmessers der Rolle 2 so gewählt, dass die Profile das Abwickeln oder das Aufwickeln nicht behindern. Mit anderen Worten sind die Abstände A1 und A2 der Profile voneinander verschieden lang. Beispielsweise beträgt der Abstand A1 der der Handkurbel 11 zugewandten ersten beiden Profile 5.1, 5.2 bzw. 16.1, 16.2 voneinander jeweils 10% der Länge L der Abdeckplatte 1, der Abstand A2 der nächstfolgenden 3. bis 6. Profile 5.3 bis 5.6 bzw. 16.3 bis 16.6 jeweils voneinander etwa 15% der Länge L und der Abstand A3 des 6. Profils 5.6 bzw. 16.6 von der Stirnseite 13.2 etwa 20% der Länge L der Abdeckplatte 1.
An der der Wickelwelle 9 gegenüberliegenden Stirnseite 13.2 der Abdeckplatte 1 befindet sich ein Halteblech 14, das an der Unterseite US der Abdeckplatte 1 angeordnet ist und der Befestigung eines später noch zu beschreibenden Schließbleches 15 dient.

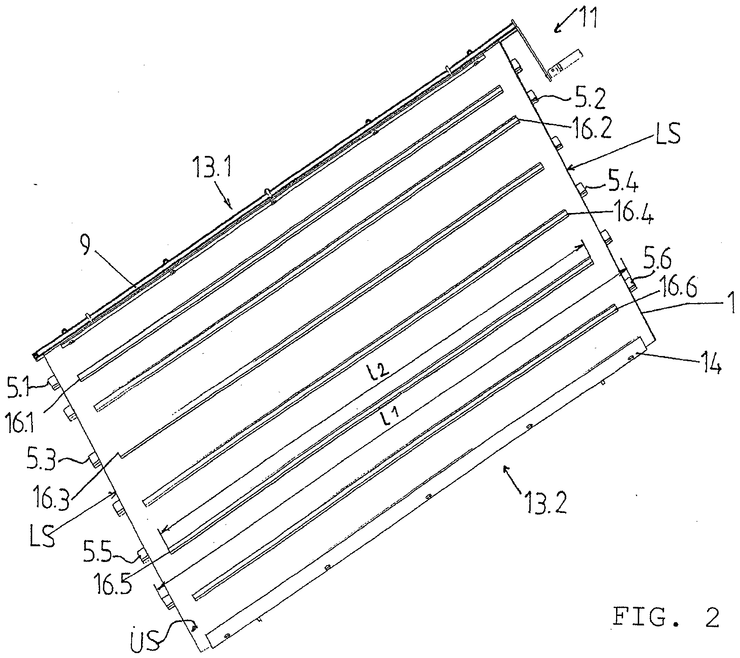

Es wird jetzt auf die Fig. 2 Bezug genommen, die eine Unteransicht der Abdeckplatte 1 zeigt. Jedem Profil 5.1 bis 5.6 zum Halten ist an der Unterseite US der Abdeckplatte 1 ein Profil 16.1 bis 16.6 zum Führen zugeordnet, das aus je einem verzinkten U-Profil der Stahlqualität S235JR besteht. Es hat beispielsweise eine Dicke d2 von 4mm, eine Breite b2 des Steges 6.2 von 30mm, eine Höhe h2 der Schenkel von 20mm und eine Länge 12 von 1670mm (siehe auch Fig. 4).
Die Profile 16.1 bis 16.6 zum Führen sind an der Unterseite US der Abdeckplatte 1 so angeordnet, dass ihre Stege 6.2 an der Unterseite US der Abdeckplatte 1 bündig aufliegen und ihre Schenkel 7.2 von der Unterseite US aufragen.
Die Länge 12 der Profile 16.1 bis 16.6 entspricht dem lichten Innenabstand IA der Seitenwände 8 des Behälters 4, so dass die jeweiligen Stirnflächen der Profile 16.1 bis 16.2 Anschläge für die Seitenwände 8 bilden und ein Verrutschen der Abdeckplatte 1 auf der Beschickungsöffnung 3 verhindern. Anstelle der U-Profile können auch andere Profile wie Kastenhohlprofile, Trapezprofile, Rohr- oder Dreieckprofile bzw. auch ein Vollprofile, vorzugsweise Rechteckflachprofile, eingesetzt werden, ohne die Erfindung zu verlassen.
Die Profile 5.1 bis 5.6 auf der Oberseite OS der Abdeckplatte 1 und die Profile 16.1 bis 16.2 an der Unterseite US der Abdeckplatte 1 bilden jeweils miteinander kraftschlüssig verbundene Obergurte 17 und Untergurte 18.

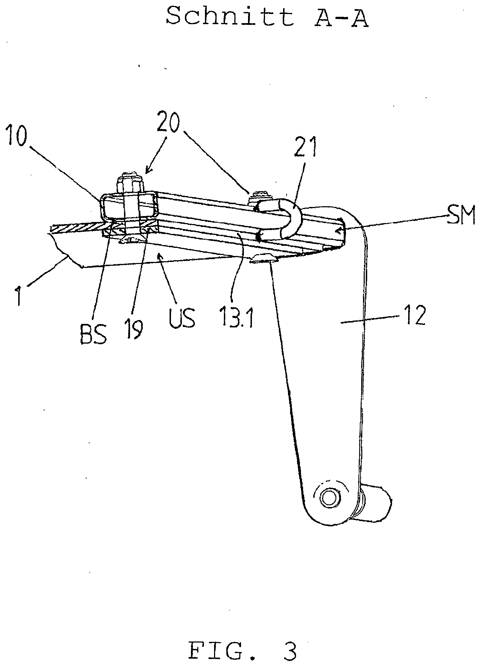

Die Fig. 3 zeigt einen perspektivischen Schnitt entlang der Linie A-A der Fig. 1. Dem Kastenhohlprofil 10 der Wickelwelle 9 ist ein an der Unterseite US der Abdeckplatte 1 angeordnetes Halteblech 19 zugeordnet. Das Kastenhohlprofil 10, die Abdeckplatte 1 und das Halteblech 19 sind durch gleichmäßig über die Breite B1 der Abdeckplatte 1 beabstandete Schraubverbindungen 20 kraftschlüssig mit der Abdeckplatte 1 verbunden. Dabei liegt das Kastenhohlprofil 10 mit seiner Breitseite BS auf der Oberseite OS der Abdeckplatte 1 auf. Die Schraubverbindungen 20 bestehen üblicherweise aus Sechskantschrauben und Sechskantmuttern mit Polyamidklemmteil und Feingewinde.
An der Schmalseite SM des Kastenhohlprofils 10, die der Stirnseite 13.1 der Abdeckplatte 1 zugewandt ist, sind voneinander gleichmäßig beabstandete Befestigungsaugen 21 verschweißt, die zum Einhängen jeweils einer Haltekette 22 dienen, welche an der Stirnwand 23.1 des Behälters 4 mittels Karabinerhaken 24 angeschlagen werden kann und die Abdeckplatte 1 in ihrer Verschlusslage in an der Stirnwand 23.1 befestigen Halteaugen 25 hält.
Es gehört aber auch zu der Erfindung, wenn die Stirnseite 13.1 der Abdeckplatte 1 an der Stirnwand 23.1 des Behälters 4 durch andere Haltemittel wie lösbare Schrauben befestigt werden. In einem solchen Fall ist nur auf zu achten, dass das Kastenhohlprofil 10 der Wickelwelle 9 beim Auf- und Abrollen der Abdeckplatte 1 nicht behindert wird.

In der Fig. 4 ist ein perspektivischer Schnitt entlang der Linie B-B der Fig. 1 dargestellt. Die Profile 5.1 bis 5.6 zum Halten und die Profile 16.1 bis 16.6 zum Führen sind durch gleichmäßig über die Breite B1 der Abdeckplatte 1 beabstandete Schraubverbindungen 26 kraftschlüssig mit der Abdeckplatte 1 verbunden. Die Schraubverbindungen 26 entsprechen denen der Schraubverbindungen 20.

Die jeweiligen Profile 5.1 bis 5.6 bilden die Obergurte 17 und die dazugehörigen Profile 16.1 bis 16.6 die Untergurte 18 für die Abdeckplatte 1. Die Obergurte 17 haben eine Länge 11, die dem Außenabstand AA der Seitenwände 8 des Behälters 4 (Absetzmulde) entspricht. Sie überragen die Breite B1 der Abdeckplatte 1 jeweils soweit, dass die Enden der Obergurte 17 die Seitenwände 8 des Behälters 4 stirnseitig übergreifen können und die Flächenlast der Abdeckplatte 1 gleichmäßig in die Seitenwände 8 des Behälters 4 eingeleitet werden kann. Die Untergurte 18 haben eine Länge 12, die dem Innenabstand IA der Seitenwände 8 des Behälters 4 entspricht, so dass die Untergurte 18 jeweils stirnseitig einen Anschlag gegen die inneren Seitenwände 8 bilden und ein sicherer Sitz der Abdeckplatte 1 in der Verschlusslage auf der Beschickungsöffnung 3 gewährleistet ist.
Es ist aber auch alternativ möglich, dass die Abdeckplatte 1 eine Breite B1 hat, die dem Außenabstand AA der Seitenwände der Länge 11 der Obergurte 17 entspricht. In einem solchem Fall stimmt die Länge 11 der Obergurte 17 mit der Breite B1 der Abdeckplatte 1 überein.

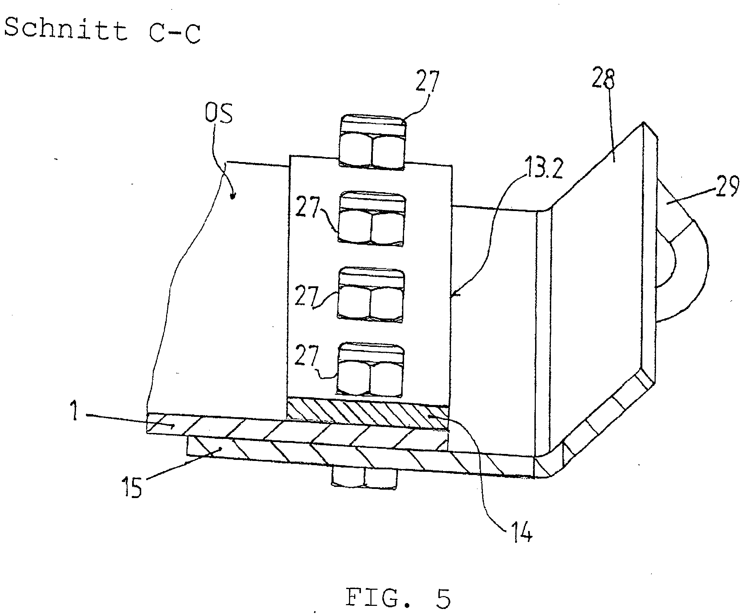

Die Fig. 5 zeigt einen perspektivischen Schnitt entlang der Linie C-C der Fig. 1. An der der Wickelwelle 9 gegenüberliegenden Stirnseite 13.2 der Abdeckplatte 1 befindet sich das Halteblech 14 und das Schließblech 15, wobei das Halteblech 14 an der Oberseite OS und das Schließblech 15 an der Unterseite US der Abdeckplatte 1 angeordnet ist. Das Halteblech 14, die Abdeckplatte 1 und das Schließblech 15 sind durch über die Breite B1 der Abdeckplatte 1 gleichmäßig beabstandete, der Art der Schraubverbindungen 20 entsprechende Schraubverbindungen 27 kraftschlüssig miteinander verbunden. Das Schließblech 15 hat einen in Richtung der Oberseite OS der Abdeckplatte 1 abgewinkelten Steg 28 von etwa 45°. Am Steg 28 sind voneinander gleichmäßig beabstandete Befestigungsaugen 29 verschweißt, die zum Einhängen jeweils einer Haltekette 30 dienen, welche von an der Stirnwand 23.2 des Behälters 4 befestigten Halteaugen 31 mittels Karabinerhaken 24 angeschlagen werden kann und die Abdeckplatte 1 in der Verschlusslage an der Stirnwand 23.2 fixiert.
Es wird betont, dass dies nur eine der möglichen Befestigungsarten darstellt. Beispielsweise kann das Halteblech 15 auch mittels anderer lösbarer Haltemittel wie Schraubverbindungen an der Stirnwand 23.2 fixiert werden.

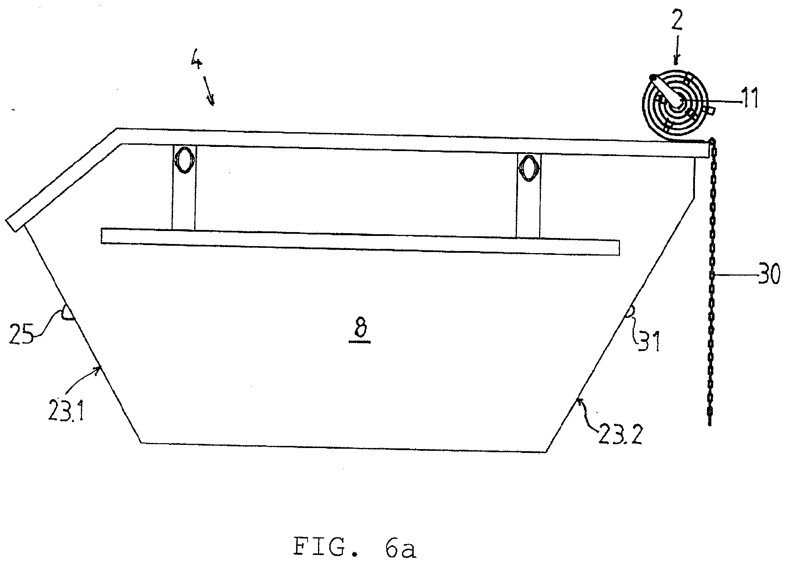

Die Fig. 6a und 6b zeigen die zu einer Rolle 2 aufgewickelte Abdeckplatte 1 am Behälter 4 in Seitenansicht und Draufsicht bei geöffneter Beschickungsöffnung 3.
Beim Aufwickeln der Abdeckplatte 1, d.h. beim Ausführen einer Drehbewegung der Handkurbe111 im Uhrzeigersinn vollzieht die Abdeckplatte 1 eine Beigebewegung in der Weise, dass die Unterseite US mit den Untergurten 18 nach oben und die Oberseite OS mit den Obergurten 17 nach unten in der Rolle gelangen. Das Auf- und Abrollen der Abdeckplatte 1 wird durch die Dimensionierung der Obergurte 17 und Untergurte 18 unterstützt.
Die jeweils mit ihren Schenkeln von der Oberseite OS und Unterseite US weg gerichteten Profile zum Halten und/oder Führen gewährleisten damit, dass die Ober- und Unterseiten der Abdeckplatte bei ihrem Auf- und Abwickeln nicht direkt aufeinander zu liegen kommen und damit einen entsprechenden Abstand voneinander haben, so dass das Auf- und Abwickeln durch den weitgehenden Wegfall der Reibkräfte erleichtert wird und die Halteketten 22 mit auf- und Abgewickelt werden können.

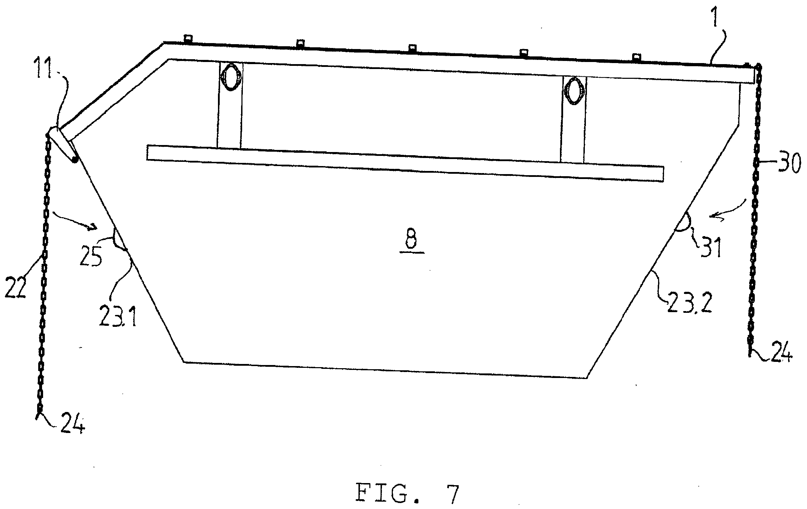

Die Fig. 7 zeigt die abgewickelte Abdeckplatte 1 am Behälters 4in Seitenansicht bei geschlossener Beschickungsöffnung 3.
Die Abdeckplatte 1 ist an ihren Stirnseiten 13.1 und 13.2 durch die Halteketten 22 und 30 an der entsprechend zugeordneten Stirnwand 23.1 bzw. 23.2 des Behälters 4 fixiert.

**Bezugszeichenliste**

| | |
|---|---|
| Abdeckplatte | 1 |
| Rolle | 2 |
| Beschickungsöffnung | 3 |
| Behälter (Absetzmulde, Container) | 4 |
| Profile zum Halten | 5.1 - 5.6 |
| Steg des Profils 5.1 - 5.6 | 6.1 |
| Steg des Profils 16.1 - 16.6 | 6.2 |
| Schenkel des Profils 5.1 - 5.6 | 7.1 |
| Schenkel des Profils 16.1 - 16.6 | 7.2 |
| Seitenwände von 4 | 8 |
| Wickelwelle | 9 |
| Kastenhohlprofil | 10 |
| Handkurbel | 11 |
| Kurbelarm | 12 |
| Stirnseiten von 1 | 13.1, 13.2 |
| Halteblech | 14 |
| Schließblcch | 15 |
| Profile zum Führen | 16.1 - 16.6 |
| Obergurte | 17 |
| Untergurte | 18 |
| Halteblech für 18 | 19 |
| Schraubverbindungen | 20 |
| Befestigungsaugen | 21 |
| Haltekette | 22 |
| Stirnwände von 4 | 23.1, 23.2 |
| Karabinerhaken | 24 |
| Halteaugen an 23.1 | 25 |
| Schraubverbindungen | 26, 27 |
| Steg von 15 | 28 |
| Befestigungsaugen an 28 | 29 |
| Haltekette | 30 |
| Halteaugen an 23.2 | 31 |
| Abstände der Profile 5.1 - 5.6; 16.1 - 16.6 | A1, A2 |
| Abstand des Profils 5.6, 16.6 vor. 13.2 | A3 |
| Außenabstand von 8 | AA |
| Breite der Abdeckplatte | B1 |
| Breitseite von 10 | BS |
| Breite des Stegs 6.1 | b1 |
| Breite des Stegs 6.2 | b2 |
| Dicke des Profils 5.1 - 5.6 | d1 |
| Dicke des Profils 16.1 - 16.6 | d2 |
| Höhe des Schenkels 7.1 | h1 |
| Höhe des Schenkels 7.2 | h2 |
| Lichter Innenabstand von 8 | IA |
| Länge der Abdeckplatte 1 | L |
| Längsachse von 1 und 4 | LA |
| Längsseiten von 1 | LS |
| Länge der Profile 5.1 - 5.6 | 11 |
| Länge der Profile 16.1 - 16.6 | 12 |
| Oberseite von 1 | OS |
| Schmalseite von 10 | SM |
| Unterseite von 1 | US |

## Patentansprüche

1. Vorrichtung zum Abdecken einer horizontalen Beschickungsöffnung (3) eines Behälters (4) wie Absetzmulde oder Container o. dgl., mit einer die Beschickungsöffnung (3) flexibel verschließbaren Abdeckplatte (1), die entlang der Seitenwände (8) in Richtung der Längsachse (LA) des Behälters (4) zu einer Stirnwand (23.1) des Behälters zugeordneten Rolle (2) auf- oder abwickelbar ist, wobei die Abdeckplatte (1) zum Versteifen senkrecht zu den Seitenwänden (8) Profile (5.1 bis 6.6 und 16.1 bis 16.6) zum Halten und/oder Führen aufweist und an einer Stirnseite (13.1) auf einer Oberseite (OS) der Abdeckplatte (1) eine kraftschlüssig verbundene Wickelwelle (9) mit Handkurbel (11) zum Auf- und Abwickeln der Abdeckplatte (1) vorgesehen ist, wobei die Abdeckplatte (1) an ihrer der Handkurbel (11) gegenüberliegenden Stirnseite (13.2) mit einem Schließblech (15) versehen ist, **dadurch gekennzeichnet, dass** sich die Profile (5.1 bis 5.6; 16.1 bis 16.6) aus jeweils übereinander angeordneten, die Abdeckplatte (1) kraftschlüssig verbindenden Obergurt (17) und Untergurt (18) zusammensetzen, wobei das Schließblech an der Unterseite (US) der Abdeckplatte (1) angeordnet ist, und dass an der Oberseite (OS) der Abdeckplatte (1) ein dem Schließblech (15) zugeordnetes Halteblech (14) vorgesehen ist, wobei Halteblech (14), Abdeckplatte (1) und Schließblech (15) durch Schraubverbindungen (27) kraftschlüssig miteinander verbunden sind, und dass das Schließblech (15) einen in Richtung der Oberseite (OS) der Abdeckplatte (1) abgewinkelten Steg (28) von 45° aufweist, an dem mindestens zwei Befestigungsaugen (29) zum Einhängen jeweils einer Haltekette (30) angeordnet sind, die an der zugeordneten Stirnwand (23.2) des Behälters (4) zum Befestigen oder Lösen der Abdeckplatte (1) auf bzw. von der Beschickungsöffnung (3) durch Karabinerhaken (24) anschlag- oder lösbar ist, und dass der Steg (28) durch lösbare Schraubverbindungen fest mit der Stirnwand (23.2) verbunden ist.

2. Vorrichtung nach Anspruch 1, **dadurch gekennzeichnet, dass** die Wickelwelle (11) aus einem Kastenhohlprofil (10) gebildet ist, dessen eine Breitseite (BS) entlang der Stirnseite (13.1) der Abdeckplatte (1) an der Oberseite (OS) der Abdeckplatte (1) aufliegend angeordnet ist, und dass dem Kastenprofil (10) ein an der Unterseite (US) der Abdeckplatte (1) verlegtes Halteblech (19) zugeordnet ist, wobei das Kastenhohlprofil (10), die Abdeckplatte (1) und das Halteblech (19) durch Schraubverbindungen (20) kraftschlüssig miteinander verbunden sind.

3. Vorrichtung nach Anspruch 1, **dadurch gekennzeichnet, dass** die Handkurbel (11) kraftschlüssig, vorzugsweise durch Schweißung, mit dem Kastenhohlprofil (10) so verbunden ist, dass ihr Kurbelarm (12) in einer zur Unterseite (US) der Abdeckplatte (1) hin senkrecht ausgerichteten Lage angeordnet und einer der Seitenwände (8) des Behälters (4) zugeordnet ist.

4. Vorrichtung nach Anspruch 2, **dadurch gekennzeichnet, dass** am Kastenhohlprofil (10) über die Stirnseite (13.1) der Abdeckplatte (1) voneinander gleichmäßig beabstandete Befestigungsaugen (21) zum Einhängen jeweils einer Haltekette (22) angeordnet sind, die an der zugeordneten Stirnwand (23.1) des Behälters (4) festgelegten Befestigungsaugen (25) zum Befestigen oder Lösen der Abdeckplatte (1) durch Karabinerhaken (24) anschlag- oder lösbar ist.

5. Vorrichtung nach Anspruch 1, **dadurch gekennzeichnet, dass** nach dem Beschicken des Behälters (4) die Stirnseite (13.1) der Abdeckplatte (1) mit der Stirnwand (23.1) des Behälters (4) durch Haltemittel lösbar verbunden ist und die Wickelwelle (9) nahe der Stirnwand (23.1) des Behälters (4) so angeordnet ist, dass das Auf- oder Abwickeln der Abdeckplatte (1) durch die an der Stirnwand (23.1) fixierte Stirnseite (13.1) nicht behindert wird.

6. Vorrichtung nach Anspruch 1, **dadurch gekennzeichnet, dass** die Profile (5.1 bis 5.6) des Obergurts (17) eine Länge (11) aufweisen, die dem Außenabstand (AA) der Seitenwände (8) des Behälters (4) und die Profile (16.1 bis 16.6) des Untergurts (18) eine Länge (12) besitzen, die dem lichten Innenabstand (IA) der Seitenwände (8) entsprechen.

7. Vorrichtung nach Anspruch 1, **dadurch gekennzeichnet, dass** das Profil (5.1 bis 5.6) des Obergurts (17) ein U-Profil umfasst, dessen Steg (6.1) auf der Oberseite (OS) der Abdeckplatte (1) aufliegt und deren Schenkel (7.1) von der Abdeckplatte (1) weg gerichtet sind, und dass das Profil (16.1 bis 16.6) des Untergurts (18) aus einem U-Profil gebildet ist, dessen Steg (6.2) der Unterseite (US) der Abdeckplatte (1) zugewandt und dessen Schenkel (7.2) der Unterseite (US) abgewandt sind, wobei Obergurt (17) und Untergurt (18) durch Schraubverbindungen (26) kraftschlüssig miteinander verbunden sind.

8. Vorrichtung nach Anspruch 1, **dadurch gekennzeichnet, dass** das Profil (5.1 bis 5.6) des Obergurts (17) und das Profil (16.1 bis 16.6) des Untergurts (18) ein geschlossenes Hohlprofil, vorzugsweise Kastenhohlprofil, Trapezprofil, Rohr- oder Dreieckprofil bzw. ein Vollprofil, vorzugsweise ein Rechteckflachprofil, ist.

9. Vorrichtung nach Anspruch 1, **dadurch gekennzeichnet, dass** das Profil (16.1 bis 16.6) des Untergurts (18) gegenüber dem Profil (5.1 bis 5.6) des Obergurts (17) eine Breite (b2) und eine Schenkelhöhe (h2) aufweist, die um das 0,25fache bzw. 0,57fache kleiner ist wie die Breite (b1) bzw. Schenkelhöhe (h1) der Profile (5.12 bis 5.6) des Obergurts (17).

10. Vorrichtung nach Anspruch 1, **dadurch gekennzeichnet, dass** die Profile (5.1 bis 5.6; 16.1 bis 16.6) in Richtung der Längsachse ((LA) des Behälters (4) voneinander einen Abstand (A1;A2) aufweisen, der in Abhängigkeit des Durchmessers der Rolle (2) beim Aufrollen der Abdeckplatte (1) zunimmt und bei ihrem Abrollen abnimmt.

11. Vorrichtung nach Anspruch 10, **dadurch gekennzeichnet, dass** der Abstand (A1) der der Handkurbel (11) zugewandten ersten beiden Profile (5.1, 5.2; 16.1,16.2) voneinander jeweils etwa 10% der Länge (L), der Abstand der nächstfolgenden 3. bis 6. Profile (5.3 bis 5.6; 16.3 bis 16.6) jeweils voneinander etwa 15% der Länge (L) und der Abstand des 6. Profils (5.6;16.6) von der Stirnseite (13.2) etwa 20% der Länge (L) der Abdeckplatte (1) beträgt.

12. Vorrichtung nach Anspruch 1, **dadurch gekennzeichnet, dass** die Stirnseite (13.2) der Abdeckplatte (1) an der zugeordneten Stirnwand (23.2) des Behälters (4) durch ein Haltemittel (30) lösbar fixiert ist.

13. Vorrichtung nach Anspruch 1, **dadurch gekennzeichnet, dass** die Abdeckplatte (1) eine Gummiplatte mit Gewebeeinlage oder eine biegsame Kunststoffplatte zum verbesserten Auf- und Abrollen ist.

14. Vorrichtung nach einem der Ansprüche 1 bis 13, **dadurch gekennzeichnet, dass** die Profile (5.1 bis 5.6; 16.1 bis 16.6), das Kastenhohlprofil (10) mit Handkurbel (11), das Schließblech (15), die Haltebleche (14,19), die Befestigungsaugen (21,29) die Karabinerhaken (24) und die Halteketten (22,30) aus verzinktem Stahl bestehen.

## Claims

1. An apparatus for covering a horizontal charging opening (3) of a container (4), such as a skip or shipping container or the like, having a cover plate (1) capable of flexibly closing the charging opening (3), which cover plate can be wound in or out along the side walls (8) in the direction of the longitudinal axis (LA) of the container (4) into a roll (2) assigned to an end wall (23.1) of the container, the cover plate (1) having stiffening profiles (5.1 to 6.6 and 16.1 to 16.6) perpendicular to the side walls (8) for holding and/or guiding and a winding shaft (9) with hand crank (11) being force-lockingly joined to an end face (13.1) on an upper side (OS) of the cover plate (1) for winding the cover plate (1) in or out, the cover plate (1) being provided with a closing plate (15) on the end face (13.2) thereof opposite the hand crank (11), **characterised in that** the profiles (5.1 to 5.6; 16.1 to 16.6) are made up of an upper member (17) and lower member (18) in each case arranged one above the other which force-lockingly join the cover plate (1), wherein the closing plate is arranged on the underside (US) of the cover plate (1), and **in that** a retaining plate (14) assigned to the closing plate (15) is provided on the upper side (OS) of the cover plate (1), wherein the retaining plate (14), cover plate (1) and closing plate (15) are force-lockingly joined together by screwed joints (27), and **in that** the closing plate (15) has a projection (28) angled at 45° towards the upper side (OS) of the cover plate (1), on which projection are arranged at least two fastening lugs (29) for in each case receiving a retaining chain (30) which is attachable to or detachable from the assigned end wall (23.2) of the container (4) by snap hooks (24) for fastening or detaching the cover plate (1) to/from the charging opening (3), and **in that** the projection (28) is firmly joined to the end wall (23.2) by detachable screwed joints.

2. An apparatus according to claim 1, **characterised in that** the winding shaft (11) is formed from a hollow box profile (10), the wide side (BS) of which is arranged along the end face (13.1) of the cover plate (1) lying on the upper side (OS) of the cover plate (1), and **in that** a retaining plate (19) laid on the underside (US) of the cover plate (1) is assigned to the box profile (10), wherein the hollow box profile (10), the cover plate (1) and the retaining plate (19) are force-lockingly joined together by screwed joints (20),

3. An apparatus according to claim 1, **characterised in that** the hand crank (11) is force-lockingly joined, preferably by welding, to the hollow box profile (10) in such a manner that the crank arm (12) thereof is arranged in a position oriented perpendicularly to the underside (US) of the cover plate (1) and is assigned to one of the side walls (8) of the container (4).

4. An apparatus according to claim 2, **characterised in that** fastening lugs (21) are arranged uniformly spaced apart on the hollow box profile (10) along the end face (13.1) of the cover plate (1) for in each case receiving a retaining chain (22) which is attachable to or detachable from the fastening lugs (25) fixed to the assigned end wall (23.1) of the container (4) by snap hooks (24) for fastening or detaching the cover plate (1).

5. An apparatus according to claim 1, **characterised in that**, once the container (4) has been charged, the end face (13.1) of the cover plate (1) is detachably joined by retaining means to the end wall (23.1) of the container (4) and the winding shaft (9) is arranged close to the end wall (23.1) of the container (4) in such a manner that winding in or out of the cover plate (1) is not obstructed by the end face (13.1) fixed to the end wall (23.1).

6. An apparatus according to claim 1, **characterised in that** the profiles (5.1 to 5.6) of the upper member (17) have a length (11) which corresponds to the external span (AA) of the side walls (8) of the container (4) and the profiles (16.1 to 16.6) of the lower member (18) have a length (12) which corresponds to the internal clearance (IA) of the side walls (8).

7. An apparatus according to claim 1, **characterised in that** the profile (5.1 to 5.6) of the upper member (17) comprises a U profile, the web (6.1) of which rests on the upper side (OS) of the cover plate (1) and the limbs (7.1) of which are directed away from the cover plate (1), and **in that** the profile (16.1 to 16.6) of the lower member (18) is formed from a U profile, the web (6.2) of which faces the underside (US) of the cover plate (1) and the limbs (7.2) of which face away from the underside (US), wherein the upper member (17) and lower member (18) are force-lockingly joined together by screwed joints (26).

8. An apparatus according to claim 1, **characterised in that** the profile (5.1 to 5.6) of the upper member (17) and the profile (16.1 to 16.6) of the lower member (18) is a closed hollow profile, preferably a hollow box profile, trapezoidal profile, tubular or triangular profile, or a solid profile, preferably a flat rectangular profile.

9. An apparatus according to claim 1, **characterised in that** the profile (16.1 to 16.6) of the lower member (18) has, relative to the profile (5.1 to 5.6) of the upper member (17), a width (b2) and a limb height (h2) which are respectively 0.25 times and 0.57 times smaller than the width (b1) and limb height (h1) of the profiles (5.1 to 5.6) of the upper member (17).

10. An apparatus according to claim 1, **characterised in that** the profiles (5.1 to 5.6; 16.1 to 16.6) are spaced apart (A1; A2) in the direction of the longitudinal axis (LA) of the container (4) by a distance which increases as a function of the diameter of the roller (2) during rolling up of the cover plate (1) and decreases during unrolling thereof.

11. An apparatus according to claim 10, **characterised in that** the spacing (A1) of the first two profiles (5.1, 5.2; 16.1, 16.2) facing the hand crank (11) from one another in each case amounts to approx. 10% of the length (L), the spacing of the following 3rd to 6th profiles (5.3 to 5.6; 16.3 to 16.6) from one another in each case amounts to approx. 15% of the length (L) and the spacing of the 6th profile (5.6/16.6) from the end face (13.2) amounts to approx. 20% of the length (L) of the cover plate (1).

12. An apparatus according to claim 1, **characterised in that** the end face (13.2) of the cover plate (1) is detachably fixed by retaining means (30) to the assigned end wall (23.2) of the container (4).

13. An apparatus according to claim 1, **characterised in that** the cover plate (1) is a rubber plate with woven fabric insert or a flexible plastics plate for improved winding in and out.

14. An apparatus according to one of claims 1 to 13, **characterised in that** the profiles (5.1 to 5.6; 16.1 to 16.6), the hollow box profile (10) with hand crank (11), the closing plate (15), the retaining plates (14, 19), the fastening lugs (21, 29), the snap hooks (24) and the retaining chains (22, 30) consist of galvanised steel.

## Revendications

1. Dispositif destiné à recouvrir une ouverture de chargement horizontal (3) d'un récipient (4) tel qu'une benne ou un conteneur ou similaire, avec un panneau de recouvrement (1) pouvant être refermée de manière souple avec l'ouverture de chargement (3), laquelle plaque peut être enroulée ou déroulée le long des parois latérales (8) dans la direction de l'axe longitudinal (LA) du récipient (4) par rapport à un rouleau (2) associé à une paroi avant (23.1) du récipient, dans lequel le panneau de recouvrement (1) présente en vue d'un durcissement perpendiculairement aux parois latérales (8) des profils (5.1 à 6.6 et 16.1 à 16.6) en vue d'un maintien et/ou d'un guidage et au niveau d'une face avant (13.1) sur une face supérieure (OS) du panneau de recouvrement (1) un arbre d'enroulement (9) relié par complémentarité de forces avec une manivelle (11) destiné à l'enroulement et au déroulement du panneau de recouvrement (1) est prévu, dans lequel le panneau de recouvrement (1) est doté au niveau de sa face avant (13.2) opposée à la manivelle (11) d'une plaque de fermeture (15), **caractérisé en ce que** les profils (5.1 à 5.6 ; 16.1 à 16.6) sont assemblés à partir d'une courroie supérieure (17) et d'une courroie inférieure (18) reliant le panneau de recouvrement (1) par complémentarité de forces et disposées respectivement l'une par-dessus l'autre, dans lequel la plaque de fermeture est disposée au niveau de la face inférieure (US) du panneau de recouvrement (1) et **en ce qu'**une plaque de maintien (14) associée à la plaque de fermeture (15) est prévue au niveau de la face supérieure (OS) du panneau de recouvrement (1), dans lequel la plaque de maintien (14), le panneau de recouvrement (1) et la plaque de fermeture (15) sont reliés entre eux par complémentarité de forces par le biais de raccords vissés (27),
et **en ce que** la plaque de fermeture (15) présente une aile (28) débobinée dans la direction de la face supérieure (OS) du panneau de recouvrement (1) de 45°, aile au niveau de laquelle au moins deux oeillets de fixation (29) destinés à la suspension respectivement d'une chaîne de maintien (30) sont disposés, qui peut venir en butée ou se détacher au niveau de la paroi avant associée (23.2) du récipient (4) en vue de la fixation ou du détachage du panneau de recouvrement (1) sur ou de l'ouverture de chargement (3) par le biais de mousquetons (24), et **en ce que** l'aile (28) est reliée à !a paroi avant (23.2) de manière fixe par le biais de raccords vissés démontables.

2. Dispositif selon la revendication 1, **caractérisé en ce que** l'arbre d'enroulement (11) est formé à partir d'un caisson creux (10) dont un grand côté (BS) est disposé en appui le long de la face avant (13.1) du panneau de recouvrement (1) au niveau de la face supérieure (OS) du panneau de recouvrement (1), et **en ce qu'**une plaque de maintien (19) déposée au niveau de la face inférieure (US) du panneau de recouvrement (1) est associée au caisson (10), dans lequel le caisson creux (10), le panneau de recouvrement (1) et la plaque de maintien (19) sont reliés entre eux par complémentarité de forces par le biais de raccords vissés (20).

3. Dispositif selon la revendication 1, **caractérisé en ce que** la manivelle (11) est reliée par complémentarité de forces, de préférence par soudage, au caisson creux (10) de sorte que son bras de manivelle (12) est disposé dans une position orientée perpendiculairement à la face inférieure (US) du panneau de recouvrement (1) et est associé à une des parois latérales (8) du récipient (4).

4. Dispositif selon la revendication 2, **caractérisé en ce que** sont disposés au niveau du caisson creux (10) des oeillets de fixation (21) équidistants entre eux sur la face avant (13.1) du panneau de recouvrement (1) en vue de suspendre respectivement une chaîne de maintien (22) qui peut venir en butée ou se détacher par le biais de mousquetons (24) au niveau des oeillets de fixation (25) établis au niveau de la paroi avant associée (23.1) du récipient (4) en vue de la fixation ou du détachage du panneau de recouvrement (1).

5. Dispositif selon la revendication 1, **caractérisé en ce que**, après le chargement du récipient (4) la face avant (13.1) du panneau de recouvrement (1) est reliée de manière détachable à la paroi avant (23.1) du récipient (4) par le biais de moyens de maintien et l'arbre d'enroulement (9) est disposé à proximité de la paroi avant (23.1) du récipient (4) de sorte que l'enroulement ou le déroulement du panneau de recouvrement (1) n'est pas empêché par le biais de la face avant (13.1) fixée à la paroi avant (23.1).

6. Dispositif selon la revendication 1, **caractérisé en ce que** les profils (5.1 à 5.6) de la courroie supérieure (17) présentent une longueur (11) qui correspond à l'écartement externe (AA) des parois latérales (8) du récipient (4) et les profils (16.1 à 16.6) de la courroie inférieure (18) possèdent une longueur (12) qui correspond à l'écartement interne libre (IA) des parois latérales (8).

7. Dispositif selon la revendication 1, **caractérisé en ce que** le profil (5.1 à 5.6) de la courroie supérieure (17) comprend un profil en U, dont le dos (6.1) est en appui sur la face supérieure (OS) du panneau de recouvrement (1) et dont les branches (7.1) sont éloignées du panneau de recouvrement (1), et **en ce que** le profil (16.1 à 16.6) de la courroie inférieure (18) est formé à partir d'un profil en U, dont le dos (6.2) de la face inférieure (US) est tourné vers le panneau de recouvrement (1) et dont les branches (7.2) sont opposées à la face inférieure (US), dans lequel la courroie supérieure (17) et la courroie inférieure (18) sont reliées entre elles par complémentarité de forces par le biais de raccords vissés (26).

8. Dispositif selon la revendication 1, **caractérisé en ce que** le profil (5.1 à 5.6) de la courroie supérieure (17) et le profil (16.1 à 16.6) de la courroie inférieure (18) sont un profil creux fermé, de préférence un caisson creux, un profil en trapèze, un profil tubulaire ou triangulaire ou un profil plein, de préférence un profil plat rectangulaire.

9. Dispositif selon la revendication 1, **caractérisé en ce que** le profil (16.1 à 16.6) de la courroie inférieure (18) présente par rapport au profil (5.1 à 5.6) de la courroie supérieure (17) une largeur (b2) et une hauteur de branches (h2) qui est de 0,25 fois respectivement de 0,57 fois plus petit que la largeur (b1) ou la hauteur de branches (h1) des profils (5.1 à 5.6) de la courroie supérieure (17).

10. Dispositif selon la revendication 1, **caractérisé en ce que** les profils (5.1 à 5.6 ; 16.1 à 16.6) présentent dans la direction de l'axe longitudinal (LA) du récipient (4) un écartement (A1 ; A2) entre eux, lequel écartement augmente en fonction du diamètre des rouleaux (2) au moment de l'enroulement du panneau de recouvrement (1) et diminue au moment de son déroulement.

11. Dispositif selon la revendication 10, **caractérisé en ce que** l'écartement (A1) l'un par rapport à l'autre des deux premiers profils (5.1, 5.2 ; 16.1, 16.2) tournés vers la manivelle (11) s'élève respectivement à environ 10 % de la longueur (L), l'écartement des 3ème au 6ème profils suivants (5.3 à 5.6 ; 16.3 à 16.6) respectivement les uns par rapport aux autres s'élève à environ 15 % de la longueur (L) et l'écartement du 6ème profil (5.6 ; 16.6) par rapport à la face avant (13.2) s'élève à environ 20 % de la longueur (L) du panneau de recouvrement (1).

12. Dispositif selon la revendication 1, **caractérisé en ce que** la face avant (13.2) du panneau de recouvrement (1) est fixée de manière détachable à la paroi avant associée (23.2) du récipient (4) par le biais d'un moyen de maintien (30).

13. Dispositif selon la revendication 1, **caractérisé en ce que** le panneau de recouvrement (1) est un panneau en caoutchouc avec une doublure en tissu ou un panneau en matière synthétique malléable destiné à l'amélioration de l'enroulement et du déroulement.

14. Dispositif selon l'une des revendications 1 à 13, **caractérisé en ce que** les profils (5.1 à 5.6 ; 16.1 à 16.6), le caisson creux (10) avec la manivelle (11), la plaque de fermeture (15), les plaques de maintien (14, 19), les oeillets de fixation (21, 29), les mousquetons (24) et les chaînes de maintien (22, 30) se composent d'acier galvanisé.
